# EUROPEAN PATENT APPLICATION

(11) **EP 1 838 096 A2**
(43) Date of publication of application: **26.09.2007**
(21) Application number: 06122792.2
(22) Date of filing: 24.10.2006
(51) Int. Cl.: H04N 5/50

(54) **TV signal receiving apparatus and channel scanning method**

(30) Priority: 22.03.2006 JP 2006078282
(71) Applicant: KABUSHIKI KAISHA TOSHIBA, Tokyo 105-8001 (JP)
(72) Inventor: Yamaguchi, Tatsuo Toshiba Corporation, Minato-ku Tokyo 105-8001 (JP); Oka, Hiroyuki Toshiba Corporation, Minato-ku Tokyo 105-8001 (JP); Hirabayashi, Hirotada Toshiba Corporation, Minato-ku Tokyo 105-8001 (JP); Kanbe, Yuki Toshiba Corporation, Minato-ku Tokyo 105-8001 (JP)
(74) Representative: Henkel, Feiler & Hänzel

(57) **Abstract**

According to one embodiment, a TV signal receiving apparatus includes a plurality of tuners (21A, 21B) which receive TV signals and an auto scan controller (101). The controller (101) executes an auto scan function of scanning an entire range of a frequency band, which is receivable by said plurality of tuners (21A, 21B), by scanning a predetermined unit of a frequency and of detecting a channel viewable at an area located therein at the time of scanning, in parallel by using the plurality of tuners (21A, 21B).

## Description

Embodiments of the present invention relates to a control technology for reducing a time required for an auto scanning of automatically retrieving a channel which is viewable in each area.

The TV signal receiving apparatus applied to, for example, a TV unit, a DVD recorder, an HDD recorder and a personal computer includes a scanning function of automatically detecting a channel which is viewable in each area, which is sometimes called auto scan, in order to improve convenience of each user using such a product in various areas. For example, Jpn. Pat. Appln. KOKAI Publication No. 2005-277790 gives a variety of proposals for preventing omission of detection or detection failure have been made about this scan function.

As a method for detecting a channel which is viewable in each area, there is a method of scanning an entire range of the frequency band which is receivable by a tuner by scanning a predetermined unit of frequency. That is, a range of 41 MHz to 870 MHz is checked entirely by scanning a unit of 0.25 MHz or 1 MHz.

According to this channel detection method, a determination upon whether or not a TV signal is receivable is repeated the number of times equivalent to a frequency range corresponding to be detected divided by the scanning unit. Since most of the frequencies are not receivable, much time is required. The reason is that this channel detection method requires waiting until a predetermined standby time for reception has passed, which is frequently during scanning of the frequencies.

On the other hand, products having a plurality of turners have been proposed in order to enable recording a program during viewing another program or recording different two programs at the same time. However, no improvement is made on time consumed for scanning of a channel in this kind of product.

The present invention has been achieved in views of these circumstances and an object of the present invention is to provide a TV signal receiving apparatus and a channel scanning method of the TV signal receiving apparatus, which enables reduction of time required for an auto scanning of automatically retrieving a channel which is viewable in each area.

To achieve the above described object, the TV signal receiving apparatus of the present invention includes a plurality of tuners to receive TV signals, and scan control means for executing an auto scan function by each of said plurality of tuners in parallel in order to (i) scan an entire range of a frequency band, which is receivable by said plurality of tuners, at a scan interval of a predetermined unit of a frequency, and (ii) detect a channel viewable at an area located therein at the time of scanning.

The invention can be more fully understood from the following detailed description when taken in conjunction with the accompanying drawings, in which:
FIG. 1 is an exemplary diagram showing the schematic configuration of an information processing apparatus according to an embodiment of the present invention;
FIG. 2 is an exemplary block diagram showing the scan function of a TV application program which operates in the information processing apparatus of the same embodiment;
FIG. 3 is an exemplary diagram for explaining a basic principle of auto scan executed by the TV application program which operates in the information processing apparatus of the same embodiment;
FIG. 4 is an exemplary flow chart showing the operation procedure of the auto scan executed by the TV application program which operates in the information processing apparatus of the same embodiment;
FIG. 5 is an exemplary diagram for explaining a first modification of the auto scan executed by the TV application program which operates in the information processing apparatus of the same embodiment; and
FIG. 6 is an exemplary diagram for explaining a second modification of the auto scan executed by the TV application program which operates in the information processing apparatus of the same embodiment.

Hereinafter, the embodiments of the present invention will be described with reference to the accompanying drawings.

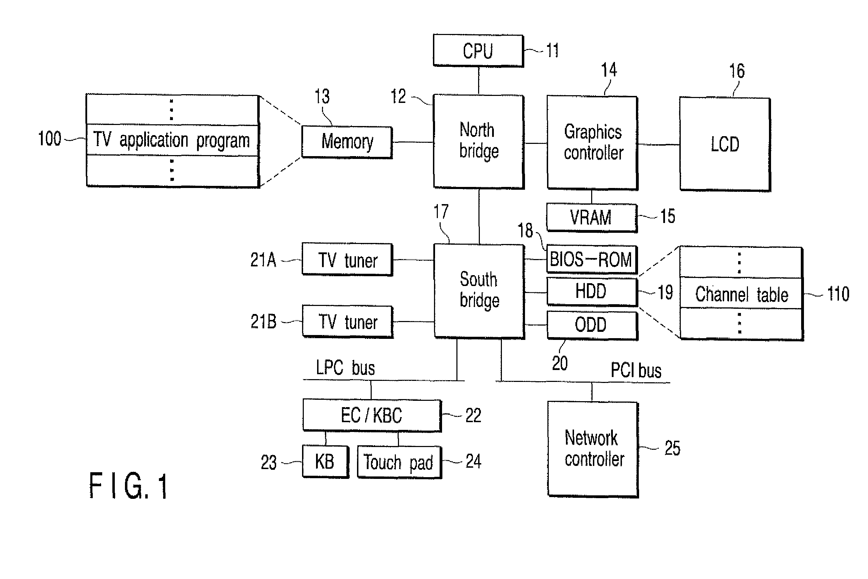

FIG. 1 is a diagram showing the schematic configuration of an information processing apparatus according to an embodiment of the present invention. The information processing apparatus of this embodiment is embodied as a personal computer for ordinary user such as a notebook type and disk top type ones, which includes TV function of receiving TV signal for viewing, recording and reproducing TV pictures.

As shown in FIG. 1, the computer includes a CPU 11, a north bridge 12, a system memory 13, a graphics controller 14, a video RAM 15, an LCD (liquid crystal display) 16, a south bridge 17, a BIOS (basic input output system)-ROM 18, a hard disk drive (HDD) 19, an optical disk drive (ODD) 20, two TV broadcasting tuners 21A, 21B, an embedded controller/keyboard controller (EC/KBC) 22, a keyboard 23, a touch pad 24, and a network controller 25.

The computer provides a high performance TV function of recording a program while another program is being viewed and recording different two programs at the same time by being equipped with two TV broadcasting tuners 21A, 21B. The TV function is achieved by TV application program 100 loaded on the system memory 13 and executed by the CPU 11. Further, the HDD 19 stores a channel table 110 for recording information which is control data of the TV application program 100 and which indicates which channel is viewable in an area where the computer is used.

The CPU 11 is a processor for controlling the operation of the computer, which executes various programs loaded from the HDD 19 to the system memory 13, such as an operating system and a TV application program. Further, the CPU 11 executes a system BIOS which is stored in the BIOS-ROM 18. The system BIOS is a program for hardware control. The system BIOS includes a TV tuner driver for controlling the TV broadcasting tuners 21A, 21B, which are hardware, with the TV application program 100, which is software.

The north bridge 12 is a bridge device for connecting between a local bus of the CPU 11 and the south bridge 17. The north bridge 12 incorporates a memory controller for controlling the system memory 13. Further, the north bridge 12 has a function of communicating with the graphics controller 14 through a bus.

The graphics controller 14 is a display controller for controlling the LCD 16 used as a display monitor of the computer 10. The VRAM 15 is a memory device used as a work area when the graphics controller 105 generates video data.

The south bridge 17 controls each device on an LPC (low pin count) and each device on a PCI (peripheral component interconnect). The south bridge 17 incorporates an IDE (integrated drive electronics) controller for controlling the HDD 19 and ODD 20. Further, the south bridge 17 has a function of communicating with the TV broadcasting tuners 21A, 21B. The TV broadcasting tuners 21A, 21B are tuning modules for receiving TV signals of a specific channel.

The EC/KBC 22 is a 1-chip microcomputer on which an embedded controller for power control and a keyboard controller for controlling the keyboard 23 and touch pad 24 are integrated. The network controller 25 is a communication device for executing radio communication based on the IEEE 802.11 standard or executing serial bus communication based on the IEEE 1394 standard, for example.

The TV function provided by the computer having such a configuration includes a scan function (auto scan) of automatically detecting a channel which is viewable in each area in order to improve convenience of each user using the product in respective areas. According to one embodiment of the invention, auto scanning is conducted in a frequency range of 41 MHz to 870 MHz by units of 1 MHz. Then, the TV application program 100 for achieving the TV function on the computer executes independent control for reducing a time required for the scan function, and these points will be described below.

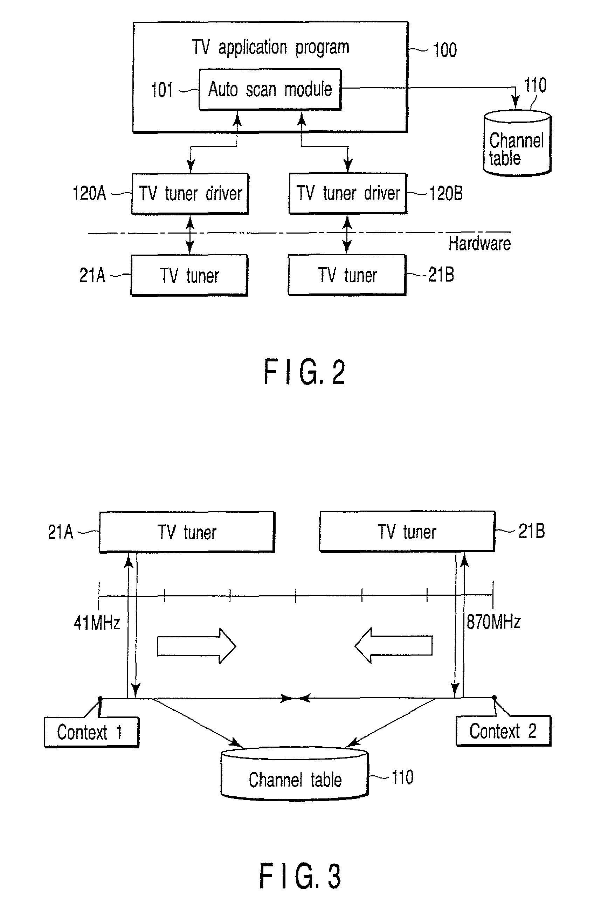

FIG. 2 is a block diagram showing the scan function of the TV application program 100. As shown in FIG. 2, the TV application program 100 includes an auto scan module 101 for achieving the scan function.

The auto scan module 101 drives two TV broadcasting tuners 21A, 21B, which are hardware, with two TV tuner drivers 120A, 120B so as to execute the two scanning operations in parallel for detecting a channel and records the result on a channel table 110. That is, the auto scan modules 101 reduces a time required for scanning function by executing the two scanning operations in parallel. The basic principle of the control performed for above-mentioned operations will be described with reference to FIG. 3. In the meantime, on the channel table 110, information indicating whether or not each frequency of every 1 MHz in the frequency range of 41 MHz to 870 MHz has been already scanned, and information indicating whether or not a channel through which a program is viewable has been detected, is recorded.

The auto scan module 101 generates a first task (context 1) of scanning starting from a frequency of 41 MHz and progressing the scanning while incrementing the frequency by 1 MHz each and a second task (context 2) of scanning starting from a frequency of 870 MHz and progressing the scanning while decrementing the frequency by 1 MHz each. Then, the auto scan module 101 controls the context 1 using the TV broadcasting tuner 21A and the context 2 using the TV broadcasting tuner 21B.

Information indicating whether or not each frequency to be scanned has been already scanned is recorded on the channel table 110. Thus, the respective processing can be terminated at a time when the processing of both the context 1 and context 2 has progressed so that the scanned frequencies begin to overlap each other. If a large difference occurs in the frequency scanning rate (progress) of the context 1 and the context 2 due to environmental conditions, such as channels viewable in that area are disproportionate on either side of the frequency range (e.g., more or less viewable channels near 41 MHz or 870 MHz), the context on a side progressing fast scans more frequently than the content on a side progressing late (scans more than half the total frequencies to be scanned), so that the required time can be reduced without being affected by the environment.

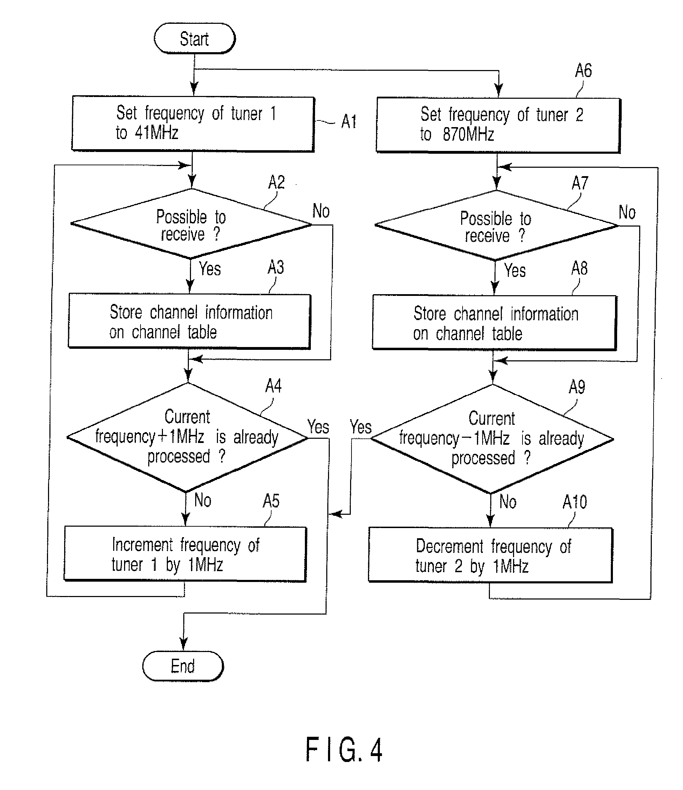

FIG. 4 is a flow chart showing the operating procedure of the auto scan to be executed on this computer.

The auto scan module 101 sets the frequency of the TV broadcasting tuner 21A to 41 MHz through the TV tuner driver 120A (block A1) and at the same time, sets the frequency of the TV broadcasting tuner 21B to 870 MHz through the TV tuner driver 120B (block A6).

After the settings end, the auto scan module 101 checks whether the TV broadcasting tuner 21A can receive a synchronous signal of TV signal (block A2). If it can receive (YES in block A2), the auto scan module 101 records the channel information on the channel table 110 (block A3). On the other hand, the auto scan module 101 checks whether or not the TV broadcasting tuner 21B can receive a synchronous signal of the TV signal (block A7). If it can receive (YES in block A7), the auto scan module 101 records the channel information on the channel table 110 (block A8).

Next, the auto scan module 101 checks whether or not the frequency produced by incrementing a frequency set for the TV broadcasting tuner 21A by 1 MHz is already processed (block A4). Unless it is processed (NO in block A4), the auto scan module 101 sets the frequency of the TV broadcasting tuner 21A to a frequency incremented by 1 MHz from a current frequency (block A5), and the processing from block A2 is repeated. On the other hand, the auto scan module 101 checks whether or not the frequency produced by decrementing the frequency set for the TV broadcasting tuner 21B by 1 MHz (block A9). Unless it is processed (NO in block A9), the auto scan module 101 sets the frequency of the TV broadcasting tuner 21B to the frequency decremented by 1 MHz from a current frequency (block A10), and the processing from block A7 is repeated.

If the frequency produced by incrementing the frequency of the TV broadcasting tuner 21A by 1 MHz is already processed (YES in block A4), the auto scan module 101 terminates the scanning operation using the TV broadcasting tuner 21A. If the frequency produced by decrementing the frequency of the TV broadcasting tuner 21B by 1 MHz is already processed (YES in block A9), the scanning operation using the TV broadcasting is terminated.

As described above, the auto scan module 101 included in the TV application program 100 controls the two scanning operations using the TV broadcasting tuners 21A, 21B in parallel. Therefore, the computer achieves reduction of the time required by the scanning function.

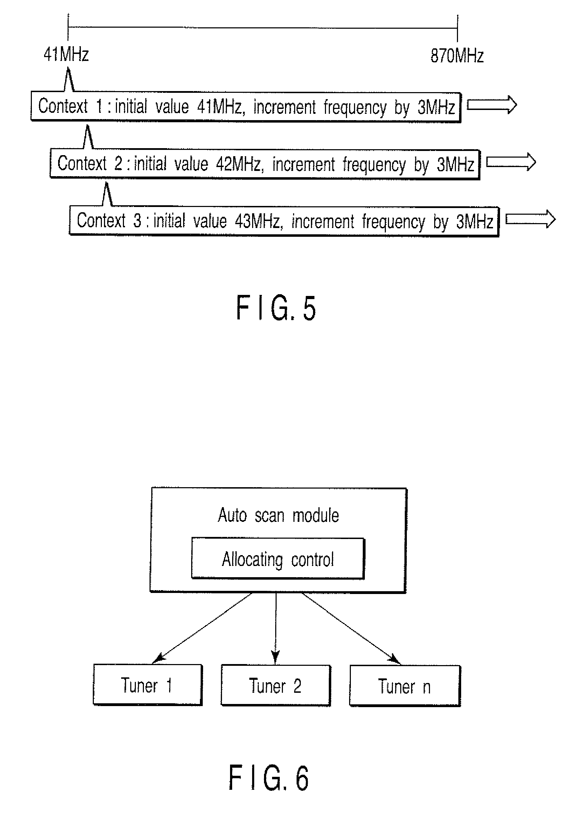

A case where the TV broadcasting tuners 21A, 21B are provided is presumed. However, if three TV broadcasting tuners are provided, the embodiment may be modified such that the control as shown in FIG. 5 is executed. According to the example shown in FIG. 5, the first task (context 1) of scanning starting from a frequency of 41 MHz, a second task (context 2) of scanning starting from a frequency of 42 MHz, and a third task (context 3) of starting the scanning from the frequency of 43 MHz are generated. Then, the contexts 1 to 3 progress the scanning while incrementing the frequency by 3 MHz each.

In this case, a difference in progress between the each context cannot be controlled. However, reduction of the required time can be expected sufficiently because the three scanning operations are executed simultaneously.

If a multithread type task which enables a plurality of processing units to be executed internally in parallel can be generated, the control for reducing the required time for the scanning function can be realized by allocating unprocessed frequencies to each TV broadcasting tuner dynamically as shown in FIG. 6.

Further, it is effective enough to divide the range of 41 MHz to 870 MHz equally by the number of TV broadcasting tuners and generate a task for each and executes the tasks in parallel.

## Claims

1. A TV signal receiving apparatus **characterized by** comprising:
a plurality of tuners (21A, 21B) to receive TV signals; and
scan control means (101) for executing an auto scan function by each of said plurality of tuners in parallel in order to (i) scan an entire range of a frequency band, which is receivable by said plurality of tuners, at a scan interval of a predetermined unit of a frequency, and (ii) detect a channel viewable at an area located therein at the time of scanning.

2. A TV signal receiving apparatus according to claim 1, **characterized in that** the scan control means executes the auto scan function being a first auto scan function for scanning within the frequency band starting from a first frequency at a low frequency side of the frequency band and progressing toward a second frequency at high frequency side and a second auto scan function, operating in parallel with the first auto scan function, for scanning within the frequency band starting at the second frequency and progressing toward the first frequency side.

3. A TV signal receiving apparatus according to claim 2, **characterized in that** the scan control means unifies management of the frequencies scanned in the first and second auto scan functions, and when an already scanned frequency turns to be scanned, terminates the auto scan function.

4. A TV signal receiving apparatus according to claim 1, **characterized in that** the scan control means divides the frequency band by a number of the plurality of tuners in order to produce a plurality of divided frequency bands, and executes the auto scan functions for scanning an entire range of each divided frequency band in parallel.

5. A TV signal receiving apparatus according to claim 1, **characterized in that** the scan control means executes the auto scan functions each associated with one of the plurality of tuners for collectively scanning the entire range of the frequency band where by scanning a predetermined unit of frequency in parallel by shifting a starting point by the unit of frequency.

6. A TV signal receiving apparatus according to claim 1, **characterized in that** the scan control means allots frequency to be scanned in the entire range of the frequency band to the plurality of tuners by dynamically allocating the frequency not yet scanned to one of the tuners which has terminated the scanning at a frequency.

7. A TV signal receiving apparatus **characterized by** comprising:
a plurality of turners (21A, 21B) which receive TV signals;
a channel table (110) which stores a frequency of a channel that is receivable by each of said plurality of tuners; and
scan control means (101) for executing an auto scan function of scanning an entire range of a frequency band, which is receivable by said plurality of tuners, by scanning a predetermined unit of a frequency and of detecting a channel viewable at an area located therein at the time of scanning, in parallel by using said plurality of tuners.

8. A channel scanning method of a television (TV) signal receiving apparatus having a plurality of turners which receive TV signals, the method **characterized by** comprising:
receiving TV signals via said plurality of turners; and
executing (A1-A10) an auto scan function of scanning an entire range of a frequency band, which is receivable by said plurality of tuners, by scanning a predetermined unit of a frequency and of detecting a channel viewable at an area located therein at the time of scanning, in parallel by using said plurality of tuners.

9. A channel scanning method according to claim 8, **characterized in that** the auto scan function of scanning within the frequency band from a low frequency side to a high frequency side (A1-A5) and the auto scan function of scanning within the frequency band from the high frequency side to the low frequency side (A6-A10) are executed in parallel with each other.

10. A channel scanning method according to claim 9, **characterized by** further comprising:
unifying management of the frequencies scanned by the auto scan functions; and
terminating the auto scan function when an already scanned frequency turns to be scanned.

11. A channel scanning method according to claim 8, **characterized in that** the frequency band is divided into the number of the tuners and the auto scan functions of scanning an entire range of each divided frequency band are executed in parallel.

12. A channel scanning method according to claim 8, **characterized in that** the auto scan functions are executed in a way of scanning the entire range of the frequency band by scanning a predetermined unit of frequency in parallel by shifting a starting point by the unit of frequency.

13. A channel scanning method according to claim 8, **characterized by** further comprising:
allotting frequency to be scanned in the entire range of the frequency band to said plurality of tuners by dynamically allocating the frequency not yet scanned to one of the tuners which has terminated the scanning at a frequency.
